# EUROPEAN PATENT SPECIFICATION

(11) **EP 2 819 769 B1**
(45) Date of publication and mention of the grant of the patent: **22.11.2017**
(21) Application number: 12772739.4
(22) Date of filing: 21.09.2012
(51) Int. Cl.: B01D 53/90, B01D 53/94, F01N 3/035, F01N 3/20, F01N 3/10, F01N 13/00

(54) **METHOD FOR THE REMOVAL OF NOXIOUS COMPOUNDS FROM ENGINE EXHAUST GAS**
VERFAHREN ZUR BESEITIGUNG VON SCHADSTOFFVERBINDUNGEN AUS MOTORABGASEN
PROCÉDÉ POUR L'ÉLIMINATION DE COMPOSÉS NOCIFS À PARTIR DE GAZ D'ÉCHAPPEMENT

(30) Priority: 02.03.2012 DK 201200169
(43) Date of publication of application: 07.01.2015
(73) Proprietor: Haldor Topsøe A/S, 2800 Kgs. Lyngby (DK)
(72) Inventor: JOHANSEN, Keld, Sundbylille 3600 Frederikssund (DK)
(86) International application number: PCT/EP2012/068623
(87) International publication number: WO 2013/127473

(56) References cited:
- WO-A1-2004/076037
- WO-A1-2004/111401
- WO-A1-2007/145548
- US-A1- 2007 122 317
- US-A1- 2010 077 739
- US-A1- 2011 162 347

## Description

The present invention relates to a method for reducing emission of nitrogen oxides (NOx) and particulate matter being present in the exhaust from a lean burning internal compression ignition engine. In particular, the method of the invention provides an improved reduction of NOx during cold start of the engine.

The exhaust system of modern cars with lean burning engines is equipped with an oxidation catalyst, a particulate filter and a catalyst for the selective reduction of NOx (SCR)in presence of a reduction agent.

Oxidation catalysts being active in the oxidation of volatile organic compounds and carbon monoxide and SCR catalysts are known in the art and disclosed in numerous publications.

Typically used particulate filters are the so called wall flow filters with a plurality of inlet and outlet channels.

The inlet channels are closed at their outlet and the outlet channels are closed at their inlet, so that the gas flowing into the filter is forced through porous walls defining the channels, whereby particulate matter is filtered off the gas.

In the SCR treatment, ammonia is commonly employed as the reducing agent. Ammonia is a noxious compound and it is preferred to generate ammonia in situ by thermal decomposition of a urea solution being injected as ammonia precursor into the hot exhaust gas upstream the SCR catalyst.

Even if urea is innocuous and relatively easy to store on board of a car, use of a liquid solution of urea as a precursor of ammonia reducing agent is problematic in particular in the cold start phase of the engine, i.e. when the exhaust gas temperature is below 200°C.

When injected as liquid solution in the exhaust gas, urea decomposes to ammonia in sufficient amounts for the SCR only at a temperature from about 200°C.

WO 2007/145548 discloses a selective catalytic reduction system for reducing nitric oxides emission levels from a compression ignition engine which includes a first reductant injector located upstream a first catalyst including a selective catalytic reduction coating. A second reductant injector is located downstream the first catalyst; and a second catalyst is placed downstream the second reductant injector and includes a selective catalytic reduction coating.

WO 2004/111401 discloses a method for purifying exhaust gas from an internal combustion engine by contacting the gas with a series of an oxidation catalyst, particulate filter catalysed with an SCR catalyst and a second SCR catalyst. A reducing agent is injected upstream of the particulate filter and between the particulate filter and the second SCR catalyst.

The invention is based on using an SCR catalysed filter in combination with low temperature injection of ammonia reducing agent into exhaust gas from a lean burning engine during the cold start phase of the engine when the exhaust gas temperature is below 220°C and a second SCR catalyst, wherein the necessary reducing agent is formed by decomposition of urea introduced into the exhaust gas at temperatures above 200°C after the cold start phase. Thereby it is possible to obtain a NOx reduction rate of more than 99% in the engine exhaust gas in a complete driving cycle.

Thus, the invention provides a method for the removal of noxious compounds from exhaust gas of a lean burning internal compression ignition engine comprising in series the steps of
contacting the exhaust gas with a catalyst being active in oxidation of volatile organic compounds and carbon monoxide to carbon dioxide and water and nitrogen oxide to nitrogen dioxide;
passing the thus treated exhaust gas through a particulate filter being catalysed with a first SCR catalyst for selective reduction of nitrogen oxides; and
passing the exhaust gas leaving the filter through a second SCR catalyst for the selective reduction of nitrogen oxides, wherein ammonia reducing agent is injected into the exhaust gas upstream the catalysed particulate filter during a cold start phase of the engine when the gas has a temperature of below or at 220°C, and wherein injection of ammonia is discontinued at a temperature of 220°C and urea as precursor for the ammonia reducing agent is injected into the gas between the first and second SCR catalyst when the gas has reached a temperature of 200°C.

As an advantage of the method according to the invention, ammonia has a very low mixing distance and injection of ammonia allows arranging the oxidation catalyst(DOC) and the SCR catalysed filter (SCR/DPF) in close coupled position. The close coupled position together with a small volume of DOC and SCR/DPF will facilitate a fast heat up of these units and thus a sufficient catalyst activity in an early phase after cold start. The DOC will early in the cold start phase form NO₂ from NO in exhaust and the close coupled filter SCR/DPF will have temperature conditions for passive soot regeneration with NO₂.

Ammonia injection can be started at an exhaust gas temperature from 160 °C. At temperatures below 200°C, ammonia remains substantially unconverted when passing through the DOC.

Thus, in an embodiment of the invention ammonia is injected into the exhaust gas prior to the contact with the DOC.

Alternatively, ammonia can be injected between the DOC and the SCR/DPF.

Ammonia may be stored on board as such in a container or preferably liberated from a solid ammonia storage material, by means of e.g. thermal desorption. Solid ammonia storage materials, such as metal amine salts or ammonium compounds are known in the art e.g from WO 2006/012903. Ammonia injection is discontinued when the exhaust temperature is about 220 °C and urea injection into exhaust gas leaving the catalysed filter is initiated at about 200°C.

This implies that only a limited amount of stored ammonia is required for the total NOX reduction during the cold start phase. In the main driving cycle when the exhaust gas is above 220°C, ammonia is formed by decomposition of a urea solution being injected into the hot exhaust gas between the SCR/DPF and the second SCR.

Above 200°C the NO in the exhaust gas is oxidised to NO2 by contact with the DOC. The formed NO₂ is used in the passive regeneration of the DPF. Thus, above temperatures of 220°C all the amount of formed NO₂ can exclusively be used for passive soot regeneration of the filter.

With modern low soot emission engines it is possible to rely on passive soot regeneration and the maximum inlet temperature to the second SCR catalyst can be kept below 550°C. This implies that the second SCR catalyst can be selected from cheaper vanadium or zeolite catalyst compounds.

As further advantage of the method according to the invention the passive regeneration is more effective because ammonia is not present in the exhaust gas during the main driving cycle and the SCR function of the SCR/DPF is interrupted.

Small amounts of ammonia may be present in the exhaust gas from the second SCR. It is thus preferred to pass the exhaust gas from the second SCR through a selective ammonia oxidation catalyst downstream the second SCR. The selective ammonia oxidation catalyst converts ammonia to nitrogen.

A system for use in the method according to the invention comprises within an engine exhaust gas channel connected to the engine, arranged in series
an oxidation catalyst unit for the oxidation of volatile organic compounds and carbon monoxide to carbon dioxide and water and nitrogen oxide to nitrogen dioxide;
a particulate filter comprising a first catalyst for selective reduction of nitrogen oxides;
a second catalyst unit for the selective reduction of nitrogen oxides;
upstream the particulate filter, injection means for the injection of ammonia into the engine exhaust gas channel; and
between the particulate filter and the second catalyst for the selective reduction of nitrogen oxides, injection means for the injection of urea into the engine exhaust gas channel.

The injection means for injection of ammonia is arranged between the engine and the oxidation catalyst unit.

The injection means for injection of ammonia can be connected to a container holding a solid ammonia storage material.

When the DOC and SCR/DPF are arranged in close-coupled position, temperature loss is limited, which facilitates higher temperatures and increased NO₂ formation over the DOC and higher temperatures in the filter resulting in an improved passive soot regeneration.

To remove small amounts of ammonia having not been converted in the SCR catalysts, it is preferred to arrange an ammonia slip catalyst downstream the second SCR unit.

The system will have thus have one of the following configuration:
Engine→ccDOC→NH₃(<220°C)→ccSCR/DPF→ Urea(>200°C)→ secondSCR → ASC
   alternatively
Engine→NH₃(<220°C)→ccDOC→ccSCR/DPF→ Urea(>200°C)→ mainSCR → ASC

As already mentioned hereinbefore, suitable catalysts for use in the invention are known in the art and are not a part of the invention.

Preferably, the first SCR catalyst integrated in the filter for use in the inventive method and system is based on thermostable copper and/or iron promoted zeolites or silica alumina phosphate compounds.

The second SCR catalyst for use in the inventive method and system is preferably selected from vanadium on titania, copper and/or iron promoted zeolites, copper and/or iron promoted silica alumina phosphates, optionally combined with cerium oxides with zirconium and aluminium oxides.

## Claims

1. A method for the removal of noxious compounds from exhaust gas of a lean burning internal compression ignition engine comprising in series the steps of
contacting the exhaust gas with a catalyst being active in oxidation of volatile organic compounds and carbon monoxide to carbon dioxide and water and nitrogen oxide to nitrogen dioxide;
passing the thus treated exhaust gas through a particulate filter being catalysed with a first SCR catalyst for selective reduction of nitrogen oxides; and
passing the exhaust gas leaving the filter through a second SCR catalyst for the selective reduction of nitrogen oxides, wherein ammonia reducing agent is injected into the exhaust gas upstream the catalysed particulate filter during a cold start phase of the engine when the gas has a temperature of below or at 220°C, and wherein injection of ammonia is discontinued at a temperature of 220°C and urea as precursor for the ammonia reducing agent is injected into the gas between the first and second SCR catalyst when the gas has reached a temperature of 200°C.

2. The method of claim 1, wherein the ammonia reducing agent is injected into the exhaust gas prior to the contact with the oxidation catalyst.

3. The method of claim 1, wherein the ammonia reducing agent is injected into the exhaust gas between the oxidation catalyst and the SCR catalyzed particulate filter.

4. The method according to anyone of claims 1 to 3, wherein the ammonia reducing agent is released from an ammonia absorbent prior to injection into the exhaust gas.

5. The method according to anyone of claims 1 to 4, wherein the exhaust gas is further passed through an ammonia oxidation catalyst for selective oxidation of ammonia downstream the second SCR catalyst.

## Patentansprüche

1. Verfahren zur Entfernung von schädlichen Verbindungen aus Abgas eines Magerverbrennungs-Dieselmotors, umfassend die aufeinanderfolgenden Schritte
- Kontaktieren des Abgases mit einem Katalysator, der bei der Oxidation von flüchtigen organischen Verbindungen und Kohlenmonoxid zu Kohlendioxid und Wasser und von Stickstoffoxid zu Stickstoffdioxid aktiv ist;
- Leiten des so behandelten Abgases durch einen Partikelfilter, der mit einem ersten SCR-Katalysator katalysiert ist, zur selektiven Reduktion von Stickoxiden; und
- Leiten des aus dem Filter austretenden Abgases durch einen zweiten SCR-Katalysator zur selektiven Reduktion von Stickoxiden, wobei während einer Kaltstartphase des Motors, wenn das Gas eine Temperatur von unter oder bei 220 °C hat, Ammoniak-Reduktionsmittel stromaufwärts des katalysierten Partikelfilters in das Abgas eingespritzt wird, und wobei die Einspritzung von Ammoniak bei einer Temperatur von etwa 220 °C unterbrochen wird und Harnstoff als Vorläufer für das Ammoniak-Reduktionsmittel zwischen dem ersten und dem zweiten SCR-Katalysator in das Gas eingespritzt wird, wenn das Gas eine Temperatur von 200 °C erreicht hat.

2. Verfahren gemäß Anspruch 1, wobei das Ammoniak-Reduktionsmittel vor dem Kontakt mit dem Oxidationskatalysator in das Abgas eingespritzt wird.

3. Verfahren gemäß Anspruch 1, wobei das Ammoniak-Reduktionsmittel zwischen dem Oxidationskatalysator und dem SCR-katalysierten Partikelfilter in das Abgas eingespritzt wird.

4. Verfahren gemäß einem der Ansprüche 1 bis 3, wobei das Ammoniak-Reduktionsmittel vor der Einspritzung in das Abgas aus einem Ammoniak-Absorptionsmittel freigesetzt wird.

5. Verfahren gemäß einem der Ansprüche 1 bis 4, wobei das Abgas zur selektiven Oxidation von Ammoniak außerdem durch einen Ammoniak-Oxidationskatalysator stromabwärts des zweiten SCR-Katalysators geleitet wird.

## Revendications

1. Procédé pour l'élimination de composés nocifs de gaz d'échappement d'un moteur à combustion interne de type à allumage par combustion et à mélange pauvre, comprenant, en série, les étapes de
- mise en contact du gaz d'échappement avec un catalyseur actif en oxydation de composés organiques volatils et de monoxyde de carbone en dioxyde de carbone et d'eau et d'oxyde d'azote en dioxyde d'azote;
- guidage du gaz d'échappement ainsi traité à travers un filtre à particules catalysé par un premier catalyseur SCR (réduction catalytique sélective) pour la réduction sélective d'oxydes d'azote; et
- guidage du gaz d'échappement quittant le filtre à travers un deuxième catalyseur SCR pour la réduction sélective d'oxydes d'azote, l'agent de réduction de l'ammoniac étant injecté dans le gaz d'échappement en amont du filtre à particules catalysé pendant une phase de démarrage à froid du moteur, lorsque le gaz présente une température inférieure ou égale à 220°C et l'injection d'ammoniac étant arrêtée à une température de 220°C et de l'urée étant injectée en tant que précurseur pour l'agent de réduction d'ammoniac dans le gaz entre le premier et le deuxième catalyseur SCR lorsque le gaz a atteint une température de 200°C.

2. Procédé selon la revendication 1, l'agent de réduction de l'ammoniac étant injecté dans le gaz d'échappement avant le contact avec le catalyseur d'oxydation.

3. Procédé selon la revendication 1, l'agent de réduction de l'ammoniac étant injecté dans le gaz d'échappement entre le catalyseur d'oxydation et le filtre à particules catalysé par un catalyseur SCR.

4. Procédé selon l'une quelconque des revendications 1 à 3, l'agent de réduction de l'ammoniac étant libéré à partir d'un absorbant d'ammoniac avant l'injection dans le gaz d'échappement.

5. Procédé selon l'une quelconque des revendications 1 à 4, le gaz d'échappement étant en outre guidé à travers un catalyseur d'oxydation de l'ammoniac pour l'oxydation sélective de l'ammoniac en aval du deuxième catalyseur SCR.
